(19) **Europäisches Patentamt**

**European Patent Office**

**Office européen des brevets**

(11) **EP 1 352 483 B1**

(12) **EUROPÄISCHE PATENTSCHRIFT**

(45) Veröffentlichungstag und Bekanntmachung des Hinweises auf die Patenterteilung:
**15.12.2004  Patentblatt 2004/51**

(51) Int Cl.⁷: **H04B 7/06**

(21) Anmeldenummer: **01991697.2**

(22) Anmeldetag: **27.12.2001**

(86) Internationale Anmeldenummer:
**PCT/DE2001/004931**

(87) Internationale Veröffentlichungsnummer:
**WO 2002/056500 (18.07.2002 Gazette 2002/29)**

(54) **VERFAHREN ZUR FEEDBACK-ÜBERTRAGUNG IN EINEM FUNK-KOMMUNIKATIONSSYSTEM UND STATIONEN FÜR EIN FUNK-KOMMUNIKATIONSSYSTEM**

METHOD FOR THE TRANSMISSION OF FEEDBACK IN A RADIO COMMUNICATION SYSTEM, AND STATIONS FOR A RADIO COMMUNICATION SYSTEM

PROCEDE DE TRANSMISSION D'UNE INFORMATION DE RETROACTION DANS UN SYSTEME DE COMMUNICATION RADIO, ET STATIONS POUR UN SYSTEME DE COMMUNICATION RADIO

(84) Benannte Vertragsstaaten:
**DE FR GB**

(30) Priorität: **15.01.2001  DE 10101556**

(43) Veröffentlichungstag der Anmeldung:
**15.10.2003  Patentblatt 2003/42**

(73) Patentinhaber: **SIEMENS AKTIENGESELLSCHAFT
80333 München (DE)**

(72) Erfinder:
  • **LOBINGER, Andreas
    83714 Miesbach (DE)**
  • **RAAF, Bernhard
    81475 München (DE)**
  • **WIEDMANN, Ralf
    81369 München (DE)**

(56) Entgegenhaltungen:
**EP-A- 0 807 989        WO-A-01/91323
WO-A-01/91326**

• **SAMSUNG AND SEOUL NATIONAL UNIVERSITY: "Preliminary Version of Algorithm and Simulation Results for Tx Diversity with more than 2 Tx Antennas" TSG RAN WG 1, TSGR1#14(00)0882, 4. Juli 2000 (2000-07-04), Seiten 1/4-4/4, XP002197993 OULU, FI in der Anmeldung erwähnt**
• **SIEMENS: "Advanced closed loop Tx diversity concept" 3GPP TSG RAN WG 1, TSGR1#14(00)0853, 4. Juli 2000 (2000-07-04), Seiten 1-12, XP002169992 Oulu, FI**

**Beschreibung**

Die vorliegende Erfindung betrifft ein Verfahren zur Übertragung von Rückkopplungsinformation für die Strahlformung in einem Funk-Kommunikationssystem mit einer Basisstation, deren zugeordnete Antenneneinrichtung mehrere Antennenelemente aufweist, so dass eine räumliche Auflösung bei der Strahlformung möglich ist, und einer Mehrzahl von Teilnehmerstationen. Sie betrifft ferner eine Teilnehmerstation und eine Basisstation, die zur Anwendung des Verfahrens geeignet sind.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege. Dies hat zum einen die Folge, daß ein Signal mehrfach, jeweils aus unterschiedlichen Richtungen, mit unterschiedlichen Verzögerungen, Dämpfungen und Phasenlagen, am Empfänger ankommen kann, und zum anderen können sich Beiträge des Empfangssignals kohärent mit wechselnden Phasenbeziehungen beim Empfänger überlagern und dort zu Auslöschungseffekten auf einem kurzfristigen Zeitmaßstab (fast fading) führen.

Aus DE 197 12 549 A1 ist bekannt, intelligente Antennen (smart antennas), d. h. Antennenanordnungen mit mehreren Antennenelementen, zu nutzen, um die Übertragungskapazität in Aufwärtsrichtung zu erhöhen. Diese ermöglichen eine gezielte Ausrichtung des Antennengains in eine Richtung, aus der das Uplinksignal kommt.

Aus A.J.Paulraj, C.B.Papadias, "Space-time processing for wireless communications", IEEE Signal Processing Magazine, Nov. 1997, S.49-83, sind verschiedene Verfahren zur räumlichen Signaltrennung für Auf- und Abwärtsrichtung bekannt.

Für die Abwärtsrichtung, also von Basisstation zur Teilnehmerstation, treten besondere Schwierigkeiten auf, da die Strahlformung vor der Beeinflussung der übertragenen Signale durch den Funkkanal vorzunehmen ist. Aus R. Schmalenberger, J.J. Blanz, "A comparison of two different algorithms for multi antenna C/I balancing", Proc. 2$^{nd}$ European Personal Mobile Communications Conference (EPMCC), Bonn, Deutschland, Sept. 1997, S.483-490, ist ein Algorithmus der Strahlformung in Abwärtsrichtung bekannt, wobei ein direkter Ausbreitungspfad (Sichtverbindung) zwischen den Basisstationen und den Teilnehmerstationen und eine iterative Berechnung von Strahlformungsvektoren vorausgesetzt wird. Mit jeder Änderung der Eigenschaften des Übertragungskanals muß die gesamte aufwendige iterative Berechnung wiederholt werden.

Aus DE 198 03 188 A ist ein Verfahren bekannt, wobei eine räumliche Kovarianzmatrix für eine Verbindung von einer Basisstation zu einer Teilnehmerstation bestimmt wird. In der Basisstation wird ein Eigenvektor aus der Kovarianzmatrix berechnet und für die Verbindung als ein Strahlformungsvektor verwendet. Die Sendesignale für die Verbindung werden mit dem Strahlformungsvektor gewichtet und Antennenelementen zur Abstrahlung zugeführt. Intrazell-Interferenzen werden aufgrund der Verwendung von Joint-Detection, beispielsweise in den Endgeräten, in die Strahlformung nicht einbezogen und eine Verfälschung der empfangenen Signale durch Interzell-Interferenzen wird vernachlässigt.

Anschaulich gesprochen ermittelt dieses Verfahren in einer Umgebung mit Mehrwegausbreitung einen Ausbreitungsweg mit guten Übertragungseigenschaften und konzentriert die Sendeleistung der Basisstation räumlich auf diesen Ausbreitungsweg. Dadurch kann jedoch nicht verhindert werden, daß Interferenzen auf diesem Übertragungsweg kurzfristig zu Signalauslöschungen und somit zu Unterbrechungen der Übertragung führen können.

Die Empfehlungen des 3GPP (3$^{rd}$ Generation Partnership Project, http://www.3gpp.org) sehen deshalb Verfahren vor, bei denen die Teilnehmerstation eine kurzfristige Kanalimpulsantwort $h_m$ des Kanals vom m-ten Antennenelement zur Teilnehmerstation schätzt und Gewichtungsfaktoren $w_m$ berechnet, mit denen das Sendesignal vor Abstrahlung durch das m-te Antennenelement gewichtet werden soll. Entsprechende Konzepte sind auch in M. Raitola, A. Hottinen und R. Wichmann, "Transmission diversity in wideband CDMA", erschienen in Proc. 49$^{th}$ IEEE Vehicular Technology Conf. Spring (VTC '99 Spring), S. 1545-1549, Houston, Texas 1999, behandelt.

Ein schwerwiegendes Problem dieser Vorgehensweise ist, daß der von der Teilnehmerstation abgeschätzte Vektor der Gewichtungsfaktoren an die Basisstation übertragen werden muß, und daß hierfür gemäß den Empfehlungen des 3GPP nur eine geringe Bandbreite von einem Bit pro Zeitschlitz (slot) zur Verfügung steht. Die Vektoren können daher nur grob quantisiert übertragen werden. Wenn sich der Kanal schnell ändert und die Gewichtungen von einem Zeitschlitz zum anderen aktualisiert werden müssen, sind lediglich zwei verschiedene relative Phasenlagen der Antennenelemente einstellbar. Wenn der Kanal sich langsamer ändert und z. B. vier Zeitschlitze zum Übertragen des Vektors zur Verfügung stehen, sind immerhin 16 verschiedene Werte des Vektors darstellbar.

Die bekannten Konzepte stoßen jedoch an ihre Grenzen, wenn die Zahl der Antennenelemente der Basisstation größer als zwei ist, denn die zum Übertragen des Vektors benötigte Bandbreite nimmt mit dessen Komponentenzahl, d. h. mit der Zahl der Antennenelemente zu. Das bedeutet: eine große Zahl von Antennenelementen wäre zwar einerseits wünschenswert, um den Sendestrahl möglichst genau ausrichten zu können, andererseits kann infolge der begrenzten verfügbaren Bandbreite der Gewichtungsvektor nicht so oft aktualisiert werden, wie dies zur Anpassung an das schnelle Fading erforderlich wäre.

Es wird daher intensiv nach Wegen gesucht, wie die für die Übertragung von Strahlformungs-Rückkopplungsinformation von der Teilnehmerstation zur Basisstation zur Verfügung stehende Bandbreite genutzt werden kann, um den von der Basisstation verwendeten Gewichtungsvektor durch die Teilnehmerstation einerseits möglich genau zu steuern und andererseits möglichst häufig aktualisieren zu können.

Ein diesbezüglicher Vorschlag wurde auf dem TSG-RAN-Workshop in Oulu, Finnland, 4.-7. Juli 2000 von Samsung und Seoul National University vorgetragen (TSGR1#14(00)-0882). Der Vorschlag sieht vor, dass ein Satz von Basisvektoren definiert wird, die der Teilnehmerstation und der Basisstation gleichzeitig bekannt sind, und dass, anstatt die Komponenten eines von der Basisstation für die Strahlformung zu verwendenden Gewichtungsvektors von der Teilnehmerstation an die Basisstation zu übertragen, die Teilnehmerstation lediglich eine Kombination von Basisvektoren auswählt, durch deren Linearkombination der Gewichtungsvektor an der Basisstation gebildet werden soll, und einen Bezeichner dieser Kombination sowie eine Angabe über die relative Phasenlage der in die Linearkombination eingehenden Basisvektoren an die Basisstation überträgt.

Es liegt auf der Hand, dass bei einem solchen Verfahren die Anzahl von Bits eines Bezeichners einer gegebenen Kombination von Basisvektoren sich verringert, wenn nicht alle Kombinationen der Basisvektoren als Gewichtungsvektor zugelassen werden. Je weniger Kombinationen zugelassen werden, um so gröber ist aber notwendigerweise die Steuerung der Gewichtungsvektoren durch die Teilnehmerstation.

Das bekannte Verfahren ist brauchbar, solange die Geschwindigkeit der Teilnehmerstation einige wenige km/h nicht überschreitet. Bei hohen Geschwindigkeiten der Teilnehmerstation nimmt die Häufigkeit zu, mit der der von der Basisstation verwendete Gewichtungsvektor geändert werden muss, d. h. die Basisvektoren in anderer Weise linear kombiniert werden müssen, um gute Übertragungsbedingungen zur Teilnehmerstation aufrechtzuerhalten. Eine häufigere Aktualisierung des Gewichtungsvektors ist mit dem bekannten Verfahren jedoch nur möglich, wenn die für jede Aktualisierung übertragene Zahl von Bits und damit die Genauigkeit der Steuerung des Gewichtungsvektors weiter reduziert wird.

Aufgabe der vorliegenden Erfindung ist, ein Verfahren zur Übertragung von Rückkopplungsinformationen für die Strahlformung in einem Funk-Kommunikationsystem sowie eine Teilnehmerstation und eine Basisstation, die zur Anwendung des Verfahrens geeignet sind, anzugeben, die auch bei hohen Geschwindigkeiten der Teilnehmerstation eine Steuerung des von der Basisstation verwendeten Gewichtungsvektors durch die Teilnehmerstation mit befriedigender Genauigkeit erlauben.

Die Aufgabe wird jeweils gelöst durch ein Verfahren nach Anspruch 1, eine Teilnehmerstation nach Anspruch 16 bzw. eine Basisstation nach Anspruch 18.

Erfindungsgemäß sind für die Basisstation und die Teilnehmerstation zwei Betriebszustände vorgesehen. In jedem dieser Betriebszustände überträgt die Teilnehmerstation periodisch einen Bezeichner an die Basisstation, der einen bestimmten, für die Strahlformung zu verwendeten Gewichtungsvektor spezifiziert. Je nach Betriebszustand werden erste oder zweite Bezeichner übertragen, die sich in ihrer Länge und damit in der Zahl der bezeichenbaren Gewichtungsvektoren unterscheiden. Je nach Betriebszustand verwendet die Basisstation den übertragenen Bezeichner, um den zu verwendeten Gewichtungsvektor aus einem ersten oder einem zweiten Satz von Gewichtungsvektoren zu wählen.

Je nach Betriebszustand ist also die Zahl der wählbaren Gewichtungsvektoren und damit die Feinheit der Steuerung des Gewichtungsvektors durch die Teilnehmerstation unterschiedlich. Wenn die Teilnehmerstation sich langsam bewegt, können die Empfangsbedingungen genau ausgewertet werden, und ein von der Basisstation zu verwendender Gewichtungsvektor kann mit hoher Genauigkeit angegeben werden. In einem solchen Fall wird man den hier als ersten Betriebszustand bezeichneten Betriebszustand bevorzugen, in dem relativ lange Bezeichner die Auswahl des Gewichtungsvektors aus einer großen Menge und damit eine feine Steuerung des Gewichtungsvektors erlauben. Wenn die Geschwindigkeit der Teilnehmerstation hoch ist, Messungen der Empfangsbedingungen relativ unsicher sind und auch nur in reduziertem Umfang einer Prognose über zu erwartende Empfangsbedingungen zulassen, wird der zweite Betriebszustand verwendet, in dem kürzere, und deshalb in einem gegebenen Zeitintervall öfter übertragbare Bezeichner verwendet werden. Die Tatsache, dass mit Hilfe der kürzeren Bezeichner des zweiten Betriebszustandes nur eine reduzierte Zahl von Gewichtungsvektoren auswählbar ist, kann dazu führen, dass im zweiten Zustand nur eine relativ grobe Steuerung der Gewichtungsvektoren möglich ist, muss es aber nicht, sofern der Satz der im zweiten Betriebszustand wählbaren Gewichtungsvektoren geschickt festgelegt ist.

Eine Strategie zur Festlegung dieses zweiten Satzes von Gewichtungsvektoren ist z.B., die Zusammensetzung des zweiten Satzes laufend neu festzulegen, indem darin diejenigen Gewichtungsvektoren aufgenommen werden, die in der Vergangenheit des Systems häufig verwendet worden sind. Im Extremfall ist es so möglich, den zweiten Satz von Gewichtungsvektoren auf nur zwei Elemente zu reduzieren, nämlich diejenigen zwei Gewichtungsvektoren, die im ersten Betriebszustand als letzte von der Teilnehmerstation ausgewählt oder von der Basisstation für die Strahlformung verwendet worden sind.

Alternativ kann der zweite Satz von Gewichtungsvektoren aus den zuletzt verwendeten Basisvektoren, die im ersten Betriebszustand von der Teilnehmerstation zur Bildung der Gewichtungsvektoren durch Linearkombination verwendet worden sind, bestehen.

Um den Übergang der Basisstation in den zweiten Betriebszustand zu steuern, wird zweckmäßigerweise vorab eine Schaltbitfolge definiert, deren Übertragung von der Teilnehmerstation an die Basisstation diesen Übergang auslöst. In diesem Fall sind die Bezeichner des ersten Satzes vorteilhafterweise unter denjenigen Datenwörtern einer gegebenen ersten Länge ausgewählt, die nicht mit der Schaltbitfolge beginnen. Dadurch ist es möglich, auf einem einzigen Kanal durch Übertragen der Schaltbitfolge anstelle eines ersten Bezeichners den Übergang in den zweiten Betriebszustand zu steuern.

Nach dem Übergang in den zweiten Betriebszustand kann dieser so lange aufrechterhalten bleiben, bis die Teilnehmerstation der Basisstation die Rückkehr zum ersten Betriebszustand mitteilt. Eine solche Mitteilung kann vorzugsweise dadurch erfolgen, dass die Teilnehmerstation im zweiten Betriebszustand zwischen die als Rückkopplungsinformation übertragenen zweiten Bezeichner periodisch Steuerinformation einfügt, die angibt, ob der zweite Betriebszustand fortgesetzt wird oder in den ersten Betriebszustand zurückgekehrt wird. Diese Steuerinformation kann insbesondere aus einem im Anschluss an jeden zweiten Bezeichner oder im Anschluss an eine Gruppe von mehreren zweiten Bezeichnern übertragenen Einzelbit bestehen.

Alternativ besteht auch die Möglichkeit, dass zur Aufrechterhaltung des zweiten Betriebszustandes die Schaltbitfolge periodisch übertragen wird, d.h., dass die Basisstation nach einer vorgegebenen Zeitspanne bzw. wenn im Anschluß an die Übertragung der Schaltbitfolge eine vorgegebene Zahl von Rückkopplungsbits übertragen worden ist, automatisch in den ersten Betriebszustand zurückkehrt, wenn die Schaltbitfolge nicht erneut übertragen wird.

Die Anzahl der Bits der ersten und zweiten Bezeichner und der Schaltbitfolge sind vorzugsweise so aufeinander abgestimmt, dass die Anzahl der Bits eines ersten Bezeichners der Summe der Anzahlen der Bits der Schaltbitfolge und von n zweiten Bezeichnern entspricht, wobei $n \geq 2$. Dies erlaubt im zweiten Betriebszustand eine n-mal so häufige Aktualisierung des Gewichtungsvektors wie im ersten Betriebszustand.

Vorzugsweise können Bezeichner für den zweiten Betriebszustand mit den letzten Bits der Schaltbitfolge vertauscht werden und damit zeitlich vorgezogen werden. Dieses Vorziehen von zweiten Bezeichnern ermöglicht es, die zweiten Bezeichner im zweiten Betriebszustand mit wenigstens angenähert gleichen Zeitabständen zu übertragen.

Die Zuordnung eines ersten oder zweiten Bezeichners zu einem Gewichtungsvektor des ersten bzw. zweiten Satzes ist im Prinzip willkürlich. Um zu vermeiden, dass eine fehlerhafte Übertragung einzelner Bits eines Bezeichners an die Basisstation dazu führt, dass diese einen grob fehlerhaften Gewichtungsvektor verwendet, ist es zweckmäßig, die Bezeichner jeweils Linearkombinationen von Basisvektoren so zuzuordnen, dass die Bezeichner von Linearkombinationen, die sich in mehr als einem Basisvektor unterscheiden, sich in wenigstens zwei Bits unterscheiden.

Um die große Zahl der ersten Bezeichner handhaben zu können, ist es zweckmäßig, diese aus zwei Abschnitten zusammenzusetzen, einem Auswahlabschnitt, der jeweils einen oder mehrere aus einer vorgegebenen Menge von Basisvektoren spezifiziert, aus denen der bezeichnete Gewichtungsvektor durch Linearkombination bildbar ist, und einem Phasenabschnitt, der eine Angabe über die relative Phasenlage enthält, mit der die spezifizierten Basisvektoren in die Linearkombination eingehen. Möglich ist auch, dass der Phasenabschnitt eine Information über die relative Amplitude enthält, mit der die spezifizierten Basisvektoren in die Linearkombination eingehen.

Um einen Gewichtungsvektor zu spezifizieren, der aus lediglich einem der vorgegebenen Basisvektoren besteht, ist die Übertragung einer Phasen- oder Amplitudeninformation überflüssig.

Um solche Gewichtungsvektoren ökonomisch an die Basisstation übertragen zu können, ist es zweckmäßig, wenigstens einen bestimmten Auswahlabschnitt festzulegen, dessen Übertragung der Basisstation signalisiert, dass der zu verwendende Gewichtungsvektor aus einem einzigen Basisvektor aufgebaut ist, und im darauffolgenden Phasenabschnitt eine Angabe darüber zu übertragen, welcher der Basisvektoren als Gewichtungsvektor verwendet werden soll.

Weitere Merkmale und Vorteile der Erfindung ergeben sich aus der nachfolgenden Beschreibung von Ausführungsbeispielen mit Bezug auf die Figuren. Es zeigen:

Fig. 1     ein Blockschaltbild eines Mobilfunknetzes;

Fig. 2     ein Blockschaltbild einer Basisstation des Mobilfunknetzes aus Fig. 1;

Fig. 3     ein Blockschaltbild einer Teilnehmerstation dieses Mobilfunknetzes;

Fig. 4     ein Flussdiagramm, das ein erstes Beispiel für die Arbeitsweise der Teilnehmerstation aus Fig. 3 veranschaulicht;

Fig. 5    ein Beispiel für eine Folge von Rückkopplungsbits, die bei der Arbeitsweise der Fig. 4 von der Teilnehmerstation an die Basisstation übertragen werden;

Fig. 6    ein Flussdiagramm, das ein zweites Beispiel für die Arbeitsweise der Teilnehmerstation aus Fig. 3 veranschaulicht; und

Fig. 7    ein Beispiel für eine Folge von Rückkopplungsbits, die bei der Arbeitsweise der Fig. 6 von der Teilnehmerstation an die Basisstation übertragen werden.

Fig. 8    ein weiteres Beispiel für eine Folge von Rückkopplungsbits, die bei der Arbeitsweise der Fig. 6 von der Teilnehmerstation an die Basisstation übertragen werden, das die Vorziehung der zweiten Bezeichner verdeutlicht.

Fig. 9    ein Flussdiagramm, das ein drittes Beispiel für die Arbeitsweise der Teilnehmerstation aus Fig. 3 veranschaulicht.

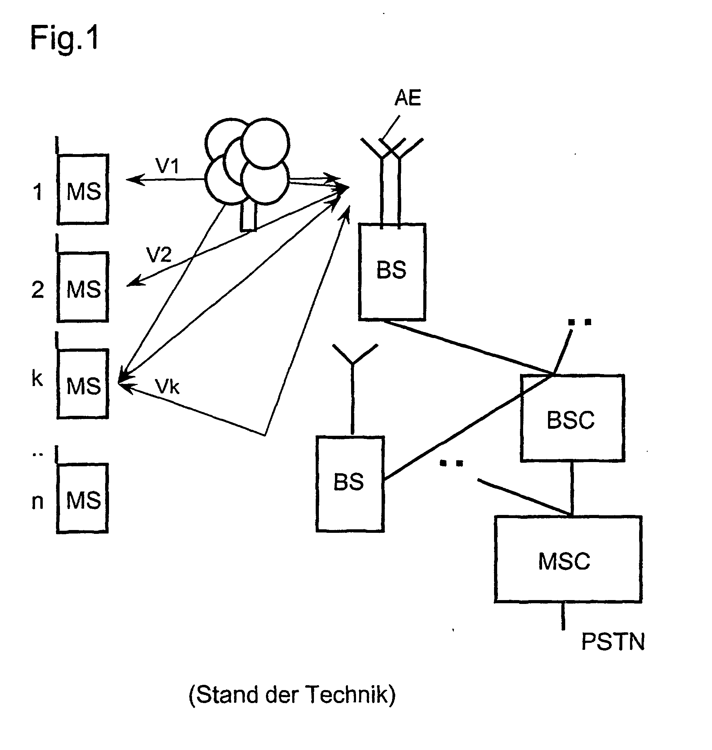

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Hierfür sind wenigstens einzelne der Basisstationen BS mit Antenneneinrichtungen AE ausgerüstet, die mehrere Antennenelemente ($A_1$ - $A_M$) aufweisen.

In Fig. 1 sind beispielhaft Verbindungen V1, V2, Vk zur Übertragung von Nutzinformationen und Signalisierungsinformationen zwischen Teilnehmerstationen MS1, MS2, MSk, MSn und einer Basisstation BS dargestellt.

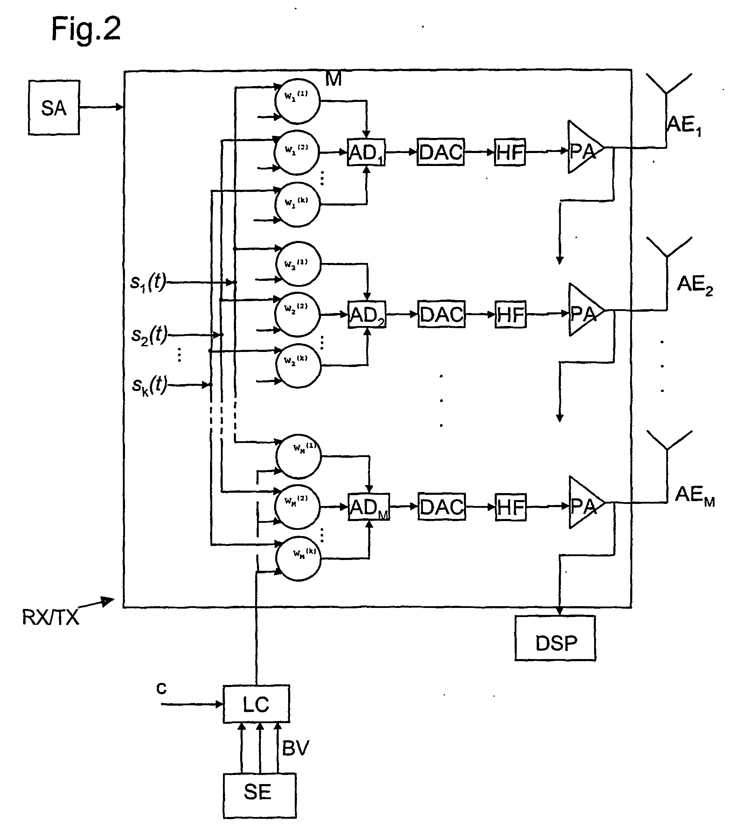

Fig. 2 zeigt schematisch den Aufbau einer Basisstation BS. Eine Signalerzeugungseinrichtung SA stellt das für die Teilnehmerstation MSk bestimmte Sendesignal in Funkblöcken zusammen und ordnet es einem Frequenzkanal TCH zu. Eine Sende/Empfangseinrichtung TX/RX erhält das Sendesignal $s_k(t)$ von der Signalerzeugungseinrichtung SA. Die Sende/Empfangseinrichtung TX/RX umfaßt ein Strahlformungsnetzwerk, in dem das Sendesignal $s_k(t)$ für die Teilnehmerstation MSk mit Sendesignalen $s_1(t)$, $s_2(t)$, ... verknüpft wird, die für andere Teilnehmerstationen bestimmt sind, denen die gleiche Sendefrequenz zugeordnet ist. Das Strahlformungsnetzwerk umfaßt für jedes Sendesignal und jedes Antennenelement einen Multiplizierer M, der das Sendesignal $s_k(t)$ mit einer Komponente $w_i^{(k)}$ eines Gewichtungsvektors $w^{(k)}$ multipliziert, der der empfangenden Teilnehmerstation MSk zugeordnet ist. Die Ausgangssignale der jeweils einem der Antennenelemente $AE_1$, $AE_2$, ..., $AE_M$ zugeordneten Multiplizierer M werden von einem Addierer $AD_1$, $AD_2$,..., $AD_M$ addiert, von einem Digitalanalogwandler DAC analogisiert, auf die Sendefrequenz umgesetzt (HF) und in einem Leistungsverstärker PA verstärkt, bevor sie das Antennenelement $AE_1$, ..., $AE_M$ erreichen. Eine zu dem beschriebenen Strahlformungsnetz analoge Struktur, die in der Figur nicht eigens dargestellt ist, ist zwischen den Antennenelementen $AE_1$, $AE_2$, ..., $AE_M$ und einem digitalen Signalprozessor DSP angeordnet, um das empfangene Gemisch von Uplink-Signalen in die Beiträge der einzelnen Teilnehmerstationen zu zerlegen und diese getrennt dem DSP zuzuführen.

Eine Speichereinrichtung SE enthält eine Mehrzahl von Basisvektoren BV, aus denen die jeweils von den Multiplizierern M verwendeten Gewichtungsvektoren durch Linearkombination in einem Linearkombinierer LC gesteuert durch ein Koeffizientensignal c erzeugt werden. Das Koeffizientensignal c besteht aus einer Folge komplexwertiger Koeffizienten, die für jeden der Basisvektoren BV das Gewicht bestimmen, mit dem er in den verwendeten Gewichtungsvektor eingeht.

Der Satz der Basisvektoren BV kann für alle mit der Basisstation BS kommunizierenden Teilnehmerstationen MS einheitlich vorgegeben sein. So kann z.B. ein Satz von Basisvektoren fest vordefiniert sein, die jeweils unterschiedlichen Abstrahlungsrichtungen der Antenneneinrichtung AE der Basisstation BS entsprechen. Alternativ ist es möglich, in der Speichereinrichtung SE für jede einzelne Teilnehmerstation MS1 ... MSn einen individuell festgelegten Satz von Basisvektoren BS zu speichern, die nur für die Erzeugung der Gewichtungsvektoren der jeweils zugeordneten Teilnehmerstation herangezogen werden. Bei diesen Basisvektoren handelt es sich um Eigenvektoren einer zeitlich gemittelten Kovarianzmatrix des von der betreffenden Teilnehmerstation empfangenen Downlink-Signals oder des von dieser Teilnehmerstation kommend von der Basisstation empfangenen Uplink-Signals.

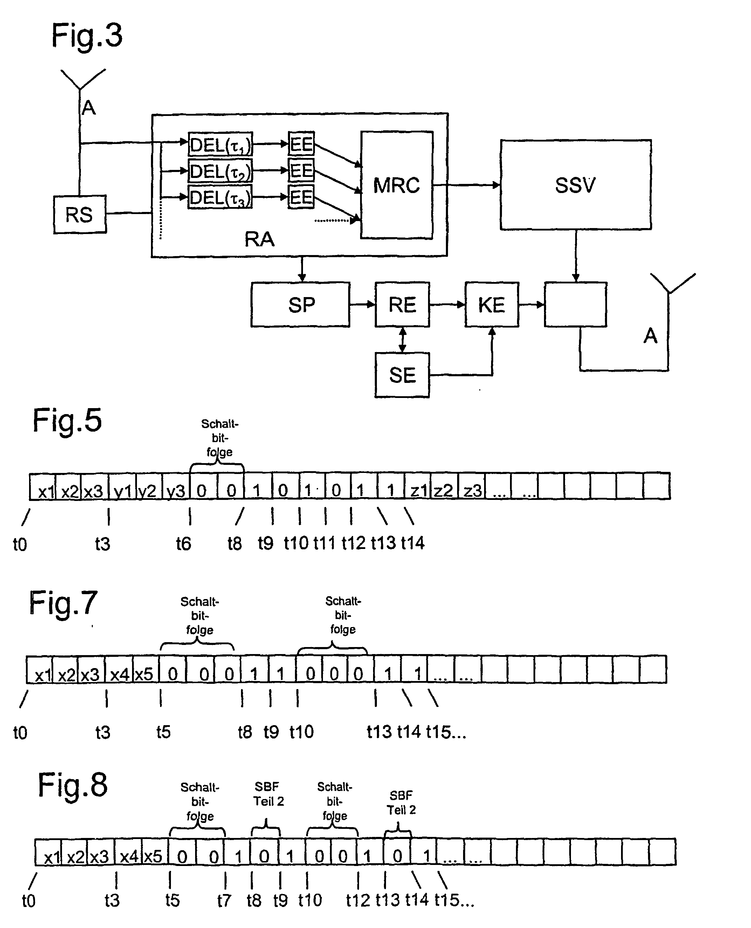

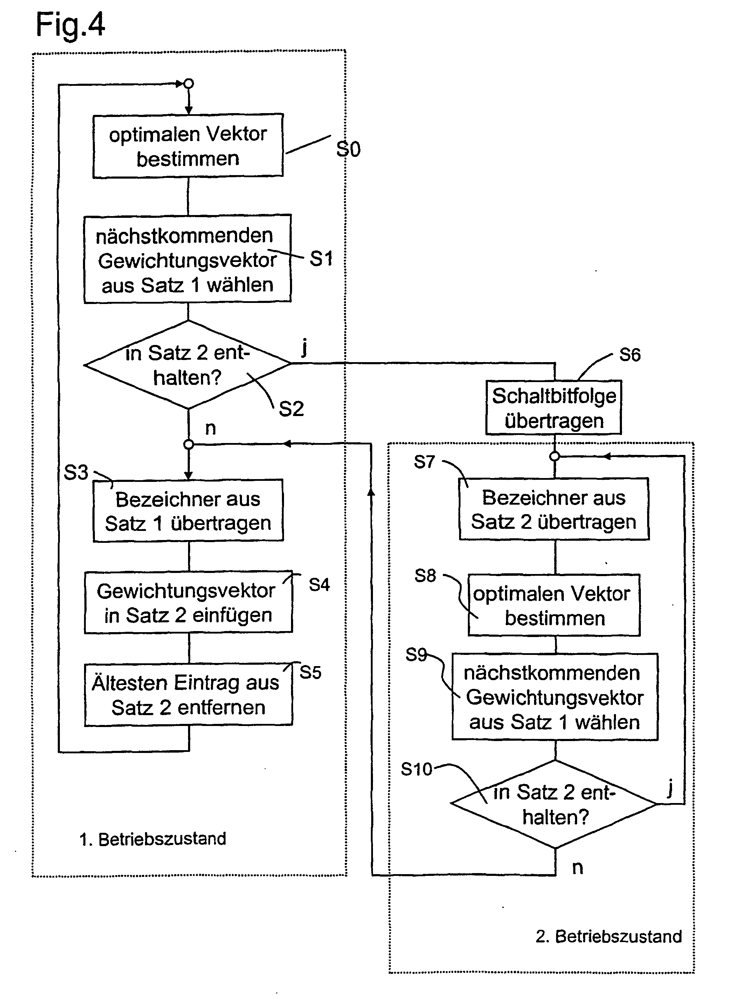

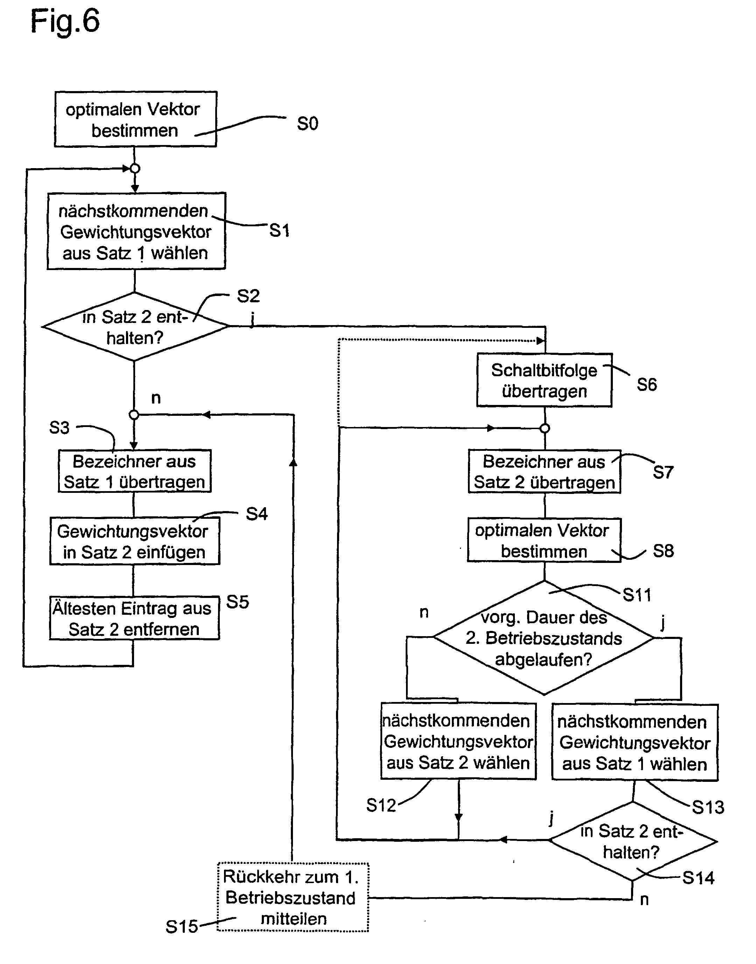

Figur 3 zeigt an einem Beispiel schematisch den Aufbau einer Teilnehmerstation MSk zur Durchführung einer ersten Ausgestaltung des erfindungsgemäßen Verfahrens. Die Teilnehmerstation MSk umfaßt eine einzige Antenne A, die das von der Basisstation BS ausgestrahlte Downlink-Signal empfängt. Das ins Basisband umgesetzte Empfangssignal von der Antenne A wird einem sogenannten Rake Searcher RS zugeführt, der dazu dient, Laufzeitunterschiede von Beiträgen des Downlink-Signals zu messen, die die Antenne A auf unterschiedlichen Ausbreitungswegen erreicht haben. Das Empfangssignal liegt ferner an einem Rake-Verstärker RA an, der eine Mehrzahl von Rake-Fingern umfaßt, von denen drei in der Figur dargestellt sind, und die jeweils ein Verzögerungsglied DEL und einen Entspreizer-Entscrambler EE aufweisen. Die Verzögerungsglieder DEL verzögern das Empfangssignal jeweils um einen vom Rake-Searcher RS gelieferten Verzögerungswert $\tau_1$, $\tau_2$, $\tau_3$, .... Die Entspreizer-Entscrambler EE liefern an ihren Ausgängen jeweils eine Folge von abgeschätzten Symbolen, wobei die Ergebnisse der Abschätzung für die einzelnen Entscrambler aufgrund unterschiedlicher Phasenlagen des Downlink-Signals zu Entscrambling- und Spreizcode in den einzelnen Fingern des Rake-Verstärkers unterschiedlich sein können.

In den von den Entspreizern-Entscramblern EE gelieferten Symbolfolgen sind auch die Ergebnisse der Abschätzung von Trainingssequenzen enthalten, die von der Basisstation BS ausgestrahlt werden, und die für jedes Antennenelement der Basisstation quasi-orthogonal und charakteristisch sind. Ein Signalprozessor SP dient zum Vergleich der Ergebnisse der Abschätzung dieser Trainingssequenzen mit den der Teilnehmerstation bekannten, tatsächlich in den Trainingssequenzen enthaltenen Symbole. Anhand dieses Vergleichs kann die Impulsantwort des Übertragungskanals zwischen Basisstation BS und Teilnehmerstation MSk für jeden einzelnen Finger oder Tap ermittelt werden. An die Ausgänge der Entspreizer-Entscrambler EE ist auch ein Maximum Ratio Combiner MRC angeschlossen, der die einzelnen abgeschätzten Symbolfolgen zu einer kombinierten Symbolfolge mit bestmöglichen Signalrauschverhältnis zusammenfügt und diese an eine Sprachsignalverarbeitungseinheit SSV liefert. Die Arbeitsweise dieser Einheit SSV, die die empfangene Symbol folge in ein für einen Benutzer hörbares Signal umwandelt bzw. empfangene Töne in eine Sendesymbolfolge umsetzt, ist hinlänglich bekannt und braucht hier nicht beschrieben zu werden.

Der Signalprozessor SP ermittelt die Impulsantworten eines jeden Antennenelements $AE_1$, ..., $AE_M$. Die Auswertung der kurzfristigen Impulsantwort ermöglicht der Teilnehmerstation MSk die Abschätzung eines "optimalen Gewichtungsvektors", dessen Verwendung zur Strahlformung durch die Basisstation BS zum aktuellen Zeitpunkt eine optimale Übertragungsqualität ermöglichen würde. In einer Recheneinheit RE wird der optimale Gewichtsvektor anhand der in der Speichereinheit SE vorliegenden Basisvektoren und der Impulsantwort berechnet. Anschließend wird der Gewichtsvektor in einer Kodiereinheit KE mit einem Bezeichner kodiert.

Eine zweckmäßige Möglichkeit für die Teilnehmerstation MSk, die Basisvektoren festzulegen, ist, in der aus der zitierten DE 198 03 188 bekannten Weise eine räumliche Kovarianzmatrix $R_{xx}$ zu bestimmen, diese zeitlich zu mitteln und ihre Eigenvektoren zu ermitteln. Diese werden anschließend an die Basisstation BS übertragen und von beiden Stationen BS, MSk, als Basisvektoren eingesetzt.

Mit der Bestimmung dieses optimalen Gewichtungsvektors in Schritt S0 setzt das im Flussdiagramm der Fig. 4 beschriebene Verfahren zur Übertragung von Rückkopplungsinformation an die Basisstation BS ein.

Vor dem Einsatz dieses Verfahrens ist ein erster Satz, im folgenden als Satz 1 bezeichnet, von Gewichtungsvektoren definiert worden. Dieser Satz 1 umfasst eine Vielzahl von Linearkombinationen der vordefinierten Basisvektoren BV. Jeder dieser Linearkombinationen ist ein Bezeichner zugeordnet, der sowohl der Teilnehmerstation MSk als auch der Basisstation BS bekannt sind. Da die Zahl der Gewichtungsvektoren des Satzes 1 begrenzt ist, können diese im allgemeinen nur eine Näherung des optimalen Vektors aus Schritt S0 darstellen. Deshalb wird in Schritt S1 unter den diversen Gewichtungsvektoren des Satzes 1 derjenige ausgewählt, der dem optimalen Vektor am nächsten kommt, genauer gesagt, dessen Verwendung das beste Empfangssignal an der Mobilstation bewirkt.

In Schritt S2 wird überprüft, ob der ausgewählte nächstkommende Gewichtungsvektor auch in einem zweiten Satz oder Satz 2 von Gewichtungsvektoren enthalten ist. Satz 2 stellt eine Teilmenge von Satz 1 dar und kann bei erstmaliger Durchführung des Schritts S2 als leer angenommen werden. Wenn die Überprüfung von Schritt S2 ergibt, dass der nächstkommende Gewichtungsvektor in Satz 2 nicht enthalten ist, geht das Verfahren über zu Schritt S3, in dem der dem nächstkommenden Gewichtungsvektor zugeordnete Bezeichner aus Satz 1 übertragen wird. Anschließend wird in Schritt S4 der gleiche Gewichtungsvektor in den Satz 2 eingefügt. Falls dies zur Folge hat, dass Satz 2 eine vorgegebene Zahl von Elementen überschreitet, wird im nachfolgenden Schritt S5 der älteste Eintrag aus Satz 2, d.h. derjenige unter den Gewichtungsvektoren von Satz 2, der am längsten nicht an die Basisstation übertragen worden ist, aus Satz 2 entfernt. Anschließend kehrt das Verfahren zu Schritt S0 zurück.

Wenn hingegen die Überprüfung von Schritt S2 ergibt, dass der nächstkommende Gewichtungsvektor in Satz 2 enthalten ist, so bedeutet dies, dass die Rückkopplungsinformation an die Basisstation BS schneller übertragen werden kann, wenn Teilnehmerstation MSk und Basisstation BS in einen zweiten Betriebszustand übergehen. Zu diesem Zweck überträgt die Teilnehmerstation MSk in Schritt S6 eine vordefinierte Schaltbitfolge an die Basisstation BS. Anschließend überträgt sie den Bezeichner des Satzes 2, der zu dem nächstkommenden Gewichtungsvektor gehört (S7). Da die Basisstation zuvor die Schaltbitfolge empfangen hat, "weiss" sie, dass der nächste Bezeichner, den die Teilnehmerstation MSk übertragen wird, zum Satz 2 gehört und ist so in der Lage, diesen korrekt auszuwerten und den von der Teilnehmerstation MSk gewünschten Gewichtungsvektor für die Strahlformung zu verwenden.

Bei einer Abwandlung des Verfahrens kann vorgesehen werden, dass nicht bereits, wenn zum ersten Mal in Schritt 2 festgestellt wird, dass der ausgewählte Gewichtungsvektor in Satz 2 enthalten ist, in den zweiten Betriebszustand gewechselt wird, sondern erst, wenn dies eine vorgegebene Zahl $n_1$ von Malen hintereinander der Fall gewesen ist.

Es ist auch nicht unbedingt erforderlich, bei der Überprüfung des Schritts S2 absolute Identität zwischen dem nächstkommenden Gewichtungsvektor und einem Vektor aus Satz 2 zu verlangen; es genügt, wenn die Abweichung zwischen beiden einen vorgegebenen Grenzwert nicht übersteigt.

Die sich anschließenden Schritte S8, S9, S10 dienen der Bestimmung des optimalen Gewichtungsvektors, der Auswahl des nächstkommenden Gewichtungsvektors aus Satz 1 und der Überprüfung, ob dieser in Satz 2 enthalten ist, entsprechend den bereits oben beschriebenen Schritten S0 bis S2, mit dem einzigen Unterschied, dass sich im Verlauf der Schritte S8 bis S10 die Teilnehmerstation MSk und die Basisstation BS im zweiten Betriebszustand befinden. Wenn in Schritt S10 festgestellt wird, dass der nächstkommende Gewichtungsvektor in Satz 2 enthalten ist, kehrt das Verfahren zum Schritt S7 zurück, und es wird erneut ein Bezeichner aus Satz 2, der dem nächstkommenden Gewichtungsvektor entspricht, an die Basisstation übertragen.

Teilnehmerstation und Basisstation verbleiben somit so lange in ihrem zweiten Betriebszustand, bis in Schritt S10 festgestellt wird, dass der nächstkommende Gewichtungsvektor nicht im Satz 2 enthalten ist. In diesem Fall kehren Teilnehmerstation und Basisstation in den ersten Betriebszustand zurück, und das Verfahren geht weiter mit der Übertragung des Bezeichners des nächstkommenden Gewichtungsvektors aus Satz 1.

Um die Rückkehr der Basisstation BS in den ersten Betriebszustand zu bewirken, gibt es unterschiedliche Möglichkeiten. Eine erste ist, jedesmal im Anschluss an die Prüfung des Schritts S10 ein Steuerbit an die Basisstation BS zu übertragen, dessen Wert das Ergebnis der Prüfung anzeigt. Wenn die Basisstation anhand dieses Steuerbits erkennt, dass der nächstkommende Gewichtungsvektor in Satz 2 enthalten ist, bleibt sie im zweiten Betriebszustand, andernfalls schaltet sie in den ersten um. Denkbar ist auch, eine zweite Schaltbitfolge zu definieren, die sich von der in Schritt S6 übertragenen unterscheiden kann, und die jeweils im Anschluss an Schritt S10 von der Teilnehmerstation MSk übertragen wird, wenn der erste Betriebszustand wieder aufgenommen werden soll.

Welche dieser Möglichkeiten unter dem Gesichtspunkt der zu übertragenden Rückkopplungsdatenmenge am ökonomischten ist, hängt von der Zahl der Elemente des ersten und des zweiten Satzes ab. Wenn der zweite Satz lediglich zwei Elemente enthält, so dass die Übertragung eines einzigen Bits als Bezeichner des zweiten Satzes in Schritt S7 ausreicht, um der Basisstation den als nächstes zu verwendenden Gewichtungsvektor mitzuteilen, so muss jeweils im Anschluss an die Übertragung dieses Bezeichners das Steuerbit übertragen werden, welches angibt, ob der zweite Betriebszustand beibehalten wird. Wenn der Satz 2 hingegen drei Elemente enthält, so müssen die Bezeichner dieser Elemente wenigstens eine Länge von 2 Bit haben, wobei unter den vier möglichen Kombinationen von 2 Bits eine keinem Gewichtungsvektor zugeordnet ist und daher als zweite Schaltbitfolge zum Wiederherstellen der ersten Betriebszustands zur Verfügung steht.

Fig. 5 zeigt ein Beispiel für eine Bitfolge von Rückkopplungsinformation, die nach dem Verfahren der Fig. 4 von der Teilnehmerstation MSk an die Basisstation BS übertragen wird. Die Folge beginnt zum Zeitpunkt t0 mit der Übertragung von 3 Bits x1, x2, x3, die einen Bezeichner des ersten Satzes darstellen. Diese Bezeichner haben hier eine Länge von 3 Bit. Ab dem Zeitpunkt t3 wird ein zweiter Bezeichner des ersten Satzes, bestehend aus den Bits y1, y2, y3, übertragen. Zum Zeitpunkt t6 beginnt die Übertragung einer Schaltbitfolge, die hier lediglich aus zwei Nullen besteht, und die den Übergang in den zweiten Betriebszustand bewirkt. Zum Zeitpunkt t8 wird ein Bezeichner des zweiten Satzes, hier mit dem Wert 1, und anschließend zum Zeitpunkt t9 ein Steuerbit mit dem Wert 0 übertragen, welches angibt, dass der zweite Betriebszustand aufrechterhalten bleibt. Dieser Vorgang wiederholt sich, bis durch die Übertragung eines Steuerbits mit dem Wert 1 zum Zeitpunkt t13 angezeigt wird, dass der erste Betriebszustand wieder aufgenommen wird. Die Übertragung eines 3 Bit langen Bezeichners z1, z2, z3 des ersten Satzes schließt sich an.

Um der Basisstation BS eine Unterscheidung zwischen den Bezeichnern der Satzes 1 und der Schaltbitfolge zu ermöglichen, müssen diese Bezeichner jeweils so gewählt sein, dass sie sich in ihren Anfangsbits von der Schaltbitfolge unterscheiden. D.h. im hier betrachteten Beispielfall stehen als Bezeichner des ersten Satzes alle 3 Bit-Kombinationen zur Verfügung, die nicht mit 00 beginnen. Es gibt also in diesem Fall sechs mögliche unterschiedliche Bezeichner, d.h. der Satz 1 kann insgesamt sechs Gewichtungsvektoren umfassen. Wenn eine größere Zahl von Gewichtungsvektoren benötigt wird, müssen längere Bezeichner verwendet werden.

Wie oben erwähnt, kann auch eine zweite Schaltbitfolge definiert werden, um die Rückkehr vom zweiten in den ersten Betriebszustand auszulösen. Auch diese Variante kann anhand der in Fig. 5 dargestellten Bitfolge erläutert werden: Von t0 bis t6 werden, wie gehabt, zwei Bezeichner der ersten Gruppe übertragen, und ab t6 wird "00" als erste Schaltbitfolge zum Umschalten in den zweiten Betriebszustand übertragen. Anschließend wird zweimal nacheinander die Bitfolge "10" als Bezeichner aus Satz 2 übertragen, ab t12 folgt die Übertragung der als zweite Schaltbitfolge definierten Bitfolge "11". Da "11" als zweite Schaltbitfolge reserviert ist, kann der zweite Satz bis zu drei Bezeichner "00", "01", "10" umfassen.

Eine alternative Arbeitsweise der Teilnehmerstation MSk ist anhand des Flussdiagramms der Fig. 6 dargestellt. Die Schritte S0 bis S8 dieses Flussdiagramms sind mit denen der Fig. 4 identisch und werden deshalb nicht erneut beschrieben. Der wesentliche Unterschied zwischen dem Verfahren der Fig. 4 und dem der Fig. 6 liegt darin, dass bei letzterem eine Mindestzeitdauer definiert ist, über die der zweite Betriebszustand beibehalten wird, nachdem er einmal eingerichtet worden ist. In dem auf Schritt S8 folgenden Schritt S11 wird überprüft, ob diese vorgegebene Dauer abgelaufen ist oder nicht. Wenn sie nicht abgelaufen ist, ist eine Rückkehr in den ersten Betriebszustand nicht möglich, so dass der dem in Schritt S8 bestimmten optimalen Vektor nächstkommende Gewichtungsvektor in Schritt S12 unmittelbar aus Satz 2 gewählt wird, woraufhin das Verfahren zu Schritt S7 zurückkehrt, in dem der Bezeichner des gewählten Gewichtungsvektors übertragen wird.

Wenn die Überprüfung in Schritt S11 ergibt, dass die vorgegebene Dauer des zweiten Betriebszustands abgelaufen ist, so ist eine Rückkehr in den ersten Betriebszustand möglich. In diesem Fall wird wie in Schritt S9 der Fig. 4 der nächstkommende Gewichtungsvektor aus Satz 1 ausgewählt (S13). Wenn die nachfolgende Überprüfung in Schritt S14 ergibt, dass der aus Satz 1 gewählte Gewichtungsvektor auch in Satz 2 enthalten ist, so kann der zweite Betriebszustand aufrechterhalten bleiben.

Einer ersten Variante zufolge wird dann der zweite Betriebszustand um ein weiteres Zeitintervall der vorgegebenen Dauer verlängert, und das Verfahren kehrt zu Schritt S7 zurück. Wenn die Überprüfung in Schritt S14 ergibt, dass der nächstkommende Gewichtungsvektor in Satz 2 nicht enthalten ist, so kehrt das Verfahren zum ersten Betriebszustand zurück. Dies muss bei der ersten Variante der Basisstation BS in Schritt S15 explizit mitgeteilt werden, etwa durch Übertragung einer zweiten Schaltbitfolge wie oben in Verbindung mit Figuren 4 und 5 beschrieben.

Einer zweiten Variante zufolge kehrt das Verfahren, wenn in Schritt S14 festgestellt wird, dass der Gewichtungsvektor in Satz 2 enthalten ist, zu Schritt S6 zurück. Somit wird erneut eine Schaltbitfolge an die Basisstation übertragen, so dass die Basisstation BS "weiss", dass der zweite Betriebszustand für ein weiteres Zeitintervall der vorgegebenen Dauer bestehen bleibt. Wenn der Gewichtungsvektor in Satz 2 nicht enthalten ist und deshalb in den ersten Betriebszustand zurückgekehrt werden soll, ist es bei dieser zweiten Variante überflüssig, dies der Basisstation BS mit einem Schritt S15 explizit mitzuteilen, da die Basisstation BS nach Ablauf der vorgegebenen Dauer ohnehin selbsttätig in den ersten Betriebszustand zurückkehrt, sofern sie nicht erneut die Schaltbitfolge des Schritts S6 empfängt.

Ein Beispiel für eine nach dieser Variante übertragene Bitfolge von Rückkopplungsinformation ist in Fig. 7 gezeigt: Die Bezeichner der ersten Gruppe sind hier jeweils 5 Bit lang, ein solcher Bezeichner mit den Bits x1, x2, ..., x5 wird ab dem Zeitpunkt t0 übertragen. Ab t5 wird die Schaltbitfolge "000" übertragen, darauf folgt zum Zeitpunkt t8 ein Bezeichner der zweiten Gruppe, bestehend aus einem Bit mit Wert "1". Zum Zeitpunkt t9 folgt wiederum ein Bezeichner der zweiten Gruppe mit Wert 1. Von t10 bis t12 wird die Schaltbitfolge wiederholt, Bezeichner der zweiten Gruppe zu den Zeitpunkten t13, t14 folgen.

Die Dauer der Aufrechterhaltung des zweiten Betriebszustandes entspricht hier also der Übertragung von 5 Bits Rückkopplungsinformation.

Die Basisstation BS kann den für die Strahlformung verwendeten Gewichtungsvektor jeweils nach Empfang eines vollständigen Bezeichners aktualisieren, beim Beispiel der Fig. 7 also jeweils im Anschluss an die Zeitpunkte t4, t8, t9, t13, t14.

Um im zweiten Betriebszustand gleichmäßigere Zeitabstände zwischen zwei Aktualisierungen zu erreichen, ist nach einer bevorzugten Weiterbildung des Verfahrens vorgesehen, die Übertragung jeweils eines von zwei Bezeichnern des zweiten Satzes durch Permutieren mit dem letzten Bit der Schaltbitfolge vorzuziehen.

In Figur 8 ist diese Weiterbildung dargestellt. Die Bezeichner der zweiten Gruppe folgen hier einander in einem Abstand von abwechselnd zwei bzw. drei Bits.

Der Vorteil der zwei mit Bezug auf Figs. 6 bis 8 beschriebenen Verfahrensvarianten liegt darin, dass die Übertragung von Steuerinformation, die der Basisstation BS mitteilt, ob der zweite Betriebszustand erhalten bleibt oder nicht, im Vergleich zum Verfahren der Fig. 4 erheblich reduziert werden kann. Wenn die Zahl der Gewichtungsvektoren des Satzes 2 auf zwei beschränkt ist, genügt hier tatsächlich ein einzelnes Bit, um während der Dauer des zweiten Betriebszustandes die Auswahl eines Gewichtungsvektors an die Basisstation zu übertragen.

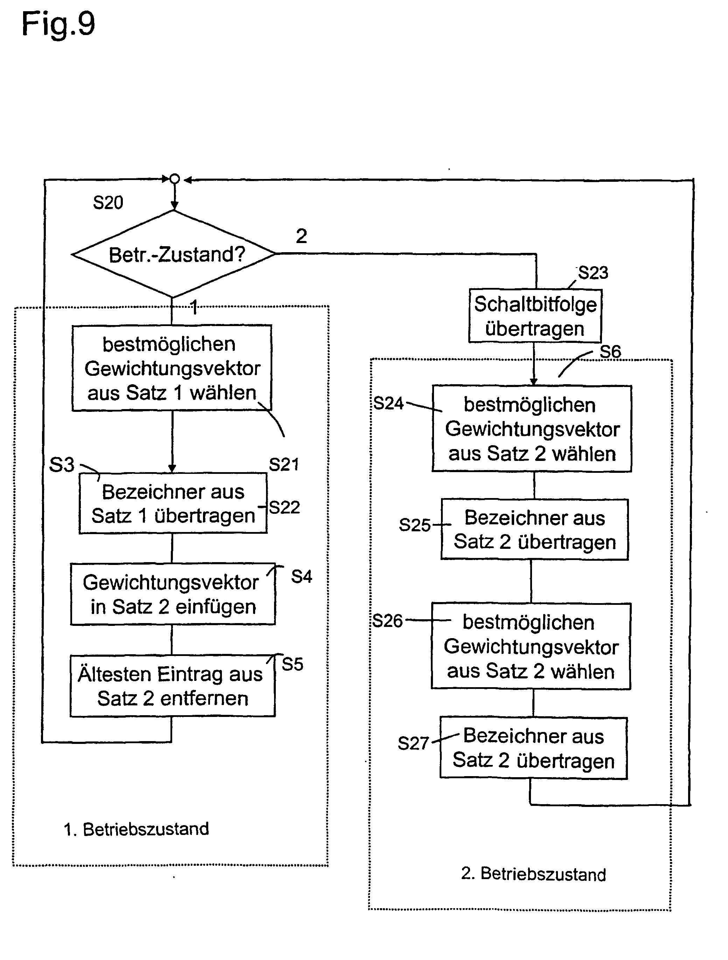

In einer in Fig. 9 dargestellten dritten Variante wird die Bestimmung eines optimalen Gewichtungsvektors nicht explizit durchgeführt. Die Teilnehmerstation entscheidet in Schritt S20 anhand einer Abschätzung ihrer Bewegungsgeschwindigkeit über den anzuwendenden Betriebszustand. Bei einer hohen Geschwindigkeit wird der kleinere Satz 2 ausgewählt, bei einer niedrigen Geschwindigkeit hingegen der Satz 1. Dabei kann ein Gewichtungsvektor aus Satz 2 auch dann ausgewählt werden, wenn in Satz 1 ein Gewichtungsvektor existiert, der bessere Empfangsbedingungen ermöglichen würde als die Vektoren aus Satz 2, denn wenn die Geschwindigkeit der Teilnehmerstation so hoch ist, dass nach Übertragung eines Bezeichners des ersten Satzes der dadurch bezeichnete Gewichtungsvektor bereits nicht mehr aktuell ist, so ist eine gröbere, dafür aber schnellere Steuerung des Gewichtungsvektors im zweiten Betriebszustand günstiger. Im ersten Betriebszustand werden die in dem Satz 1 darstellbaren Gewichtungsvektoren getestet, inwieweit sie jeweils die Übertragungseigenschaften verbessern würden (S21), und der am besten geeignete Vektor, ausgewertet anhand der gemessenen Impulsantwort, wird zur Basisstation anhand seines ersten Bezeichners signalisiert (S22). Darauf folgt, wie oben beschrieben, die Aktualisierung des zweiten Satzes (Schritte S4, S5).

Im Falle des zweiten Betriebszustands wird vorab die Schaltbitfolge komplett (gemäß Fig. 7) oder teilweise (gemäß Fig. 8) übertragen (S23). Unter den Vektoren des Satzes 2 wird der am besten zum Verbessern der Empfangsbedingungen geeignete ausgewählt (S24) und der entsprechende Bezeichner des zweiten Satzes wird an die Basisstation BS übertragen (S25). Ggf. wird nun der zweite Teil der Schaltbitfolge übertragen, dann wird erneut der bestgeeignete Vektor aus Satz 2 ausgewählt und sein Bezeichner übertragen (S26, S27).

Bei Anwendung der Bitfolge aus Fig. 8 besteht vor der vollständigen Übertragung der Schaltbitfolge für die Basisstation BS keine Gewissheit, dass tatsächlich Umschalten in den zweiten Betriebszustand gewünscht ist. Um Fehlsteuerungen zu vermeiden, kann deshalb vorgesehen werden, dass im zweiten Betriebszustand der jeweils zuerst übertragene Bezeichner nur dann von der Basisstation sofort zur Strahlformung verwendet wird, wenn sich die Basisstation bereits zuvor im zweiten Betriebszustand befunden hat und die Wahrscheinlichkeit deshalb groß ist, dass dieser beibehalten werden soll.

Wie die Gewichtungsvektoren des ersten Satzes könnten im Prinzip auch die des zweiten Satzes fest vorgegeben werden.

Vorteilhafter ist jedoch die in den obigen Beispielen bereits angesprochene Möglichkeit, dass der zweite Satz von Basisvektoren eine Auswahl aus den Gewichtungsvektoren des ersten Satzes ist, die dynamisch entsprechend der Verwendung dieser Gewichtungsvektoren aktualisiert wird. D.h. der zweite Satz enthält diejenigen Gewichtungsvektoren des ersten Satzes, die als letzte von der Teilnehmerstation MSk ausgewählt worden sind.

Nach einer vorteilhaften Abwandlung des mit Bezug auf Fig. 9 beschriebenen Verfahrens schaltet die Teilnehmerstation MSk vom zweiten in den ersten Betriebszustand zurück, wenn die für den Satz 2 ausgewählten Gewichtungsvektoren nicht mehr repräsentativ sind, d. h. keine optimale Empfangsverbesserung mehr ermöglichen. In einem typischen Szenario werden im ersten Betriebszustand aus Satz 1 die am besten geeigneten Gewichtungsvektoren ausgewählt, welche somit häufig die o.g. Eigenvektoren sind. Nachdem zwei dieser Gewichtungsvektoren respektive Eigenvektoren an die Basisstation übertragen wurden, kann auf den zweiten Betriebszustand umgeschaltet werden, und nun wird nur noch zwischen den beiden Eigenvektoren von Satz 2 hin und her geschaltet, was aber dafür aber mit höherer Frequenz geschehen kann, also auch bei höherer Geschwindigkeit gute Ergebnisse erzielt. Wenn sich die Ausbreitungsverhältnisse soweit geändert haben, dass diese für den Satz 2 ausgewählten Vektoren nicht mehr gute Näherungen für die aktuellen Eigenvektoren (bzw. häufig zu verwendende optimale Gewichtungsvektoren) sind , so kann es zweckmäßig sein, trotz hoher Geschwindigkeit zeitweilig auf den ersten Betriebszustand umzuschalten, neue Gewichtungsvektoren zu übertragen und dann wieder auf den dadurch aktualisierten Satz 2 umzuschalten. Dabei kann es auch vorteilhaft sein, während des zeitweiligen Betriebs im ersten Betriebszustand bewusst eine kurze Periode mit reduzierter Performance hinzunehmen, um anschließend, nach Rückkehr in den zweiten Betriebszustand, eine langdauernde Performanceverbesserung zu erreichen.

Was die Festlegung des ersten Satzes angeht, so wurde bereits ausgeführt, dass dieser eine festgelegte Auswahl von Linearkombinationen von für alle Teilnehmerstationen einheitlich vorgegebenen Basisvektoren oder von Eigenvektoren der von der Teilnehmerstation MSk gemessenen gemittelten Kovarianzmatrix $\overline{R_{xx}}$ umfassen kann, die an die Basisstation BS übertragen worden sind. Die Zahl dieser Basisvektoren beträgt typischerweise 3 oder 4, und durch Linearkombinieren dieser Basisvektoren kann eine große Zahl von Gewichtungsvektoren gebildet werden. Um sicherzustellen, dass von der Teilnehmerstation MSk verwendete Bezeichner dieser Gewichtungsvektoren von der Basisstation BS korrekt verstanden werden, ist eine Vorschrift für systematische Zuordnung von Bezeichnern zu Gewichtungsvektoren erforderlich. Es wird vorgeschlagen, diese Bezeichner jeweils in einen Auswahlabschnitt und einen Phasenabschnitt zu unterteilen, wobei der Auswahlabschnitt eines Bezeichners diejenigen Basisvektoren angibt, die in die bezeichnete Linearkombination eingehen, und der Phasenabschnitt die relative Phasenlage der einzelnen Basisvektoren charakterisiert. Tabelle 1 zeigt einen nach diesem Schema aufgebauten Satz von ersten Bezeichnern. Sie umfassen jeweils einen Auswahlabschnitt von 3 Bit Länge, gefolgt von einem 2 Bit langen Phasenabschnitt. Der Auswahlabschnitt kann acht verschiedene Werte annehmen, von denen lediglich sechs benötigt werden, um alle möglichen Auswahlen von zwei Basisvektoren aus einer Menge von vier Basisvektoren zu bezeichnen. Die übrig bleibenden Werte "111" und "000" können für Sonderfunktionen eingesetzt werden. Insbesondere kann einer dieser Werte, hier "111", als Schaltbitfolge zum Umschalten in den zweiten Betriebszustand dienen; der andere Wert, hier "000" bezeichnet einen Gewichtungsvektor, der sich nicht aus zwei, sondern lediglich aus einem der vier Basisvektoren zusammensetzt.

Tabelle 1

| Bits | | selektierte Basisvektoren $BV_x$ | Phase $\varphi$ |
|---|---|---|---|
| Auswahlabschnitt $X_1 X_2 X_3$ | Phasenabschnitt $X_4 X_5$ | | |
| 0 0 1 a b | | $BV_1$ , $BV_2$ | $\varphi$ (a, b) |
| 0 1 0 a b | | $BV_1$, $BV_3$ | $\varphi$ (a, b) |

Tabelle 1   (fortgesetzt)

| Bits | | selektierte Basisvektoren $BV_x$ | Phase $\varphi$ |
|---|---|---|---|
| Auswahlabschnitt $X_1\ X_2\ X_3$ | Phasenabschnitt $X_4\ X_5$ | | |
| 0 1 1 a b | | $BV_1,\ BV_4$ | $\varphi\,(a, b)$ |
| 1 0 0 a b | | $BV_2,\ BV_3$ | $\varphi\,(a, b)$ |
| 1 0 1 a b | | $BV_2,\ BV_4$ | $\varphi\,(a, b)$ |
| 1 1 0 a b | | $BV_3,\ BV_4$ | $\varphi\,(a,b)$ |
| 1 1 1 | | Schaltbitfolge | |
| 0 0 0 0 0 | | $BV_1$ | - |
| 0 0 0 0 1 | | $BV_2$ | - |
| 0 0 0 1 0 | | $BV_3$ | - |
| 0 0 0 1 1 | | $BV_4$ | - |

Wenn der Auswahlabschnitt eine Kombination von zwei Basisvektoren bezeichnet, so geben die 2 Bits des Phasenabschnitts eine relative Phasenlage dieser zwei Basisvektoren zueinander an. Die Phasenlage kann hier vier verschiedene Werte, z.B. 0°, 90°, 180° und 270°, annehmen. Der Betrag, mit dem die ausgewählten Basisvektoren in die Linearkombination eingehen, wird als konstant und für alle Basisvektoren gleich angenommen.

Wenn der Wert "000" des Auswahlabschnitts angibt, dass der Gewichtungsvektor aus lediglich einem Basisvektor bestehen soll, so werden die zwei Bits des Phasenabschnitts zur Festlegung einer Phase nicht gebraucht. In diesem Fall können sie daher herangezogen werden, um denjenigen der vier Basisvektoren zu codieren, der den bezeichneten Gewichtungsvektor bilden soll.

Bei Bedarf können die Bezeichner der ersten Gruppe zusätzlich zum Auswahl- und Phasenabschnitt noch einen Amplitudenabschnitt aufweisen, der das Amplitudenverhältnis der selektierten Basisvektoren angibt. So kann z. B. ein Amplitudenabschnitt mit einer Breite von nur einem Bit vorgesehen werden, welches angibt, ob zwei selektierte Basisvektoren entweder in einem Amplitudenverhältnis von 1:2 oder 2:1 stehen.

Die Zuordnung eines Werts des Phasenabschnitts zu einer Kombination von Basisvektoren ist im Prinzip willkürlich. Um die Übertragung der Rückkopplungsinformation möglichst wenig fehleranfällig zu machen, wird man zweckmäßigerweise die Werte den Kombinationen jeweils so zuordnen, dass in möglichst vielen Fällen die Umkehrung eines Bits des Ausfallabschnitts nur zur Vertauschung eines einzigen Basisvektors in der bezeichneten Kombination führt. So wird sichergestellt, dass auch im Falle eines einzelnen fehlerhaft übertragenen Bits des Auswahlabschnitts von zwei von der Teilnehmerstation MSk als für die Strahlformung geeignet erkannten Basisvektoren wenigstens einer von der Basisstation tatsächlich herangezogen wird, um den Gewichtungsvektor zu bilden und das Downlink-Signal auszustrahlen. Dadurch wird die Gefahr einer vollständigen Fehlsteuerung des Downlink-Strahls im Falle von fehlerhafter Übertragung der Rückkopplungsinformation reduziert. Welche Zuordnung von Zahlenwerten des Auswahlabschnitts zu Kombinationen von Basisvektoren diese Anforderung am besten erfüllt, kann nicht allgemein angegeben werden, sie kann aber für eine gegebene Zahl von auswählbaren bzw. kombinierbaren Basisvektoren durch systematische Untersuchung der endlichen Zahl möglicher Zuordnungen ermittelt werden.

## Patentansprüche

1. Verfahren zur Übertragung von Rückkopplungsinformation für die Strahlformung in einem Funk-Kommunikationssystem mit Teilnehmerstationen (MSk, MS1, MS2,...) und einer Basisstation (BS), die eine Antenneneinrichtung (AE) mit mehreren Antennenelementen ($AE_1$ bis $AE_M$) aufweist, die ein Downlinksignal jeweils gewichtet mit Komponenten ($w_i$, i=1, ..., M) eines aktuellen Gewichtungsvektors $w = (w_1\ w_2\ ...\ w_M)^T$ an eine Teilnehmerstation (MSk) abstrahlen, wobei die Teilnehmerstation (MSk) in einem ersten Betriebszustand aus einem begrenzten ersten Satz von Gewichtungsvektoren einen auswählt und einen dem zugeordneten Gewichtungsvektor zugeordneten ersten Bezeichner als Rückkopplungsinformation an die Basisstation überträgt, **dadurch gekennzeichnet, dass** - die Teilnehmerstation (MSk) und die Basisstation (BS) zeitweilig in einen zweiten Betriebszustand übergehen, wobei in dem zweiten Betriebszustand die Teilnehmerstation (MSk) aus einem zweiten Satz von Gewichtungsvektoren, der kleiner als der erste Satz ist und dem zweite Bezeichner zugeordnet sind, die kürzer als die Bezeichner des ersten Satzes sind, einen geeigneten Gewichtungsvektor auswählt und den diesem Gewichtungsvektor zugeordneten zweiten Bezeichner als Rückkopplungsinformation an die Basisstation (BS) überträgt.

2. Verfahren nach Anspruch 1, **dadurch gekennzeichnet, dass** der erste Betriebszustand gewählt wird, wenn eine Abschätzung der Geschwindigkeit der Teilnehmerstation (MSk) einen Grenzwert unterschreitet und der zweite Betriebszustand gewählt wird, wenn sie den Grenzwert überschreitet.

3. Verfahren nach Anspruch 1, **dadurch gekennzeichnet, dass** der zweite Betriebszustand gewählt wird, wenn die Abweichung zwischen einem optimalen Gewichtungsvektor und einem Gewichtungsvektor des zweiten Satzes $n_1$-mal einen Grenzwert unterschreitet und/oder der erste Betriebszustand gewählt wird, wenn die Abweichung zwischen einem optimalen Gewichtungsvektor und einem Gewichtungsvektor des zweiten Satzes $n_2$-mal einen Grenzwert überschreitet, wobei $n_1$, $n_2$ kleine natürliche Zahlen sind.

4. Verfahren nach einem der vorhergehenden Ansprüche, **dadurch gekennzeichnet, dass** vorab

   - eine Schaltbitfolge definiert wird, die nicht länger als ein erster Bezeichner ist,
   - die Menge der ersten Bezeichner unter denjenigen digitalen Datenwörtern einer gegebenen ersten Länge ausgewählt wird, die nicht mit der Schaltbitfolge beginnen oder identisch sind, und
   - dass die Teilnehmerstation durch Übertragen der Schaltbitfolge anstelle eines ersten Bezeichners einen Übergang der Basisstation (BS) von dem ersten Betriebszustand in den zweiten herbeiführt.

5. Verfahren nach einem der vorhergehenden Ansprüche, **dadurch gekennzeichnet, dass** die Teilnehmerstation (MSk) und die Basisstation (BS) im zweiten Betriebszustand bleiben, bis die Teilnehmerstation (MSk) der Basisstation (BS) die Rückkehr zum ersten Betriebszustand mitteilt.

6. Verfahren nach einem der Ansprüche 1 bis 4, **dadurch gekennzeichnet, dass** zur Aufrechterhaltung des zweiten Betriebszustandes die Schaltbitfolge periodisch übertragen wird.

7. Verfahren nach Anspruch 6, **dadurch gekennzeichnet, dass** die Anzahl der Bits eines ersten Bezeichners gleich der Summe aus den Anzahlen der Bits der Schaltbitfolge und von n zweiten Bezeichnern ($n \geq 2$) ist.

8. Verfahren nach Anspruch 7, **dadurch gekennzeichnet, dass** im zweiten Betriebszustand als Rückkopplungsinformation eine Bitfolge übertragen wird, die sich aus einem ersten Teil der Schaltbitfolge, einem zweiten Bezeichner, einem zweiten Teil der Schaltbitfolge und einem weiteren zweiten Bezeichner zusammensetzt.

9. Verfahren nach Anspruch 8, **dadurch gekennzeichnet, dass** die Länge des zweiten Teils der Schaltbitfolge gleich der des ersten Teils oder um 1 kleiner ist.

10. Verfahren nach einem der vorhergehenden Ansprüche, **dadurch gekennzeichnet, dass** die zweiten Bezeichner Gewichtungsvektoren bezeichnen, die jeweils in der Vergangenheit von der Teilnehmerstation an die Basisstation übertragen oder von der Basisstation zum Senden an die Teilnehmerstation verwendet worden sind.

11. Verfahren nach einem der vorhergehenden Ansprüche, **dadurch gekennzeichnet, dass** der Satz der zweiten Gewichtungsvektoren zwei Elemente umfasst und dass die zweiten Bezeichner jeweils ein Bit lang sind.

12. Verfahren nach einem der vorhergehenden Ansprüche, **dadurch gekennzeichnet, dass** die ersten und/oder zweiten Bezeichner aus einem Auswahlabschnitt und einem Phasenabschnitt zusammengesetzt sind, wobei der Auswahlabschnitt einen oder mehrere aus einer vorgegebenen Menge von Basisvektoren spezifiziert, aus denen der Gewichtungsvektor durch Linearkombination bildbar ist, und der Phasenteil eine Angabe über die relative Phasenlage enthält, mit der die spezifizierten Basisvektoren in die Linearkombination eingehen.

13. Verfahren nach Anspruch 12, **dadurch gekennzeichnet, dass** der Phasenabschnitt ferner eine Information über die relative Amplitude enthält, mit der die spezifizierten Basisvektoren in die Linearkombination eingehen.

14. Verfahren nach Anspruch 12 oder 13, **dadurch gekennzeichnet, dass** wenigstens ein bestimmter Auswahlabschnitt verwendet wird, um der Basisstation zu signalisieren, dass der Gewichtungsvektor einem einzelnen Basisvektor entspricht, und dass im Phasenabschnitt eine Angabe darüber übertragen wird, welcher der Basisvektoren dem Gewichtungsvektor entspricht.

**15.** Verfahren nach einem der Ansprüche 10 bis 14, **dadurch gekennzeichnet, dass** die ersten Bezeichner den Kombinationen von Basisvektoren so zugeordnet werden, dass die Bezeichner von Kombinationen, die sich in zwei Basisvektoren unterscheiden, sich in wenigstens zwei Bits unterscheiden.

**16.** Teilnehmerstation für ein Funk-Kommunikationssystem, insbesondere zur Durchführung des Verfahrens nach einem der vorhergehenden Ansprüche, die eingerichtet ist anhand eines von einer Basisstation empfangenen Funksignals einen von der Basisstation zur Formung eines an die Teilnehmerstation gesendeten Strahls zu verwendenden Gewichtungsvektor zu bestimmen und einen Bezeichner dieses Gewichtungsvektors als Rückkopplungsinformation an die Basisstation zu übertragen, **dadurch gekennzeichnet, dass** sie zwischen zwei Betriebszuständen umschaltbar ist, in denen sie jeweils Bezeichner unterschiedlicher Länge an die Basisstation überträgt.

**17.** Teilnehmerstation nach Anspruch 16, **dadurch gekennzeichnet, dass** sie den zu einem gegebenen Zeitpunkt zu verwendenden Betriebszustand anhand von Aufzeichnungen über in der Vergangenheit bestimmte Gewichtungsvektoren auswählt.

**18.** Basisstation für ein Funk-Kommunikationssystem, insbesondere zur Durchführung des Verfahrens nach einem der Ansprüche 1 bis 15, die eingerichtet ist, einen von einer Teilnehmerstation durch Rückkopplungsinformation bezeichneten Gewichtungsvektor zur Formung eines an die Teilnehmerstation gesendeten Strahls zu verwenden, **dadurch gekennzeichnet, dass** sie zwischen zwei Betriebszuständen umschaltbar ist, in denen sie aus von der Teilnehmerstation übertragener Rückkopplungsinformation Bezeichner von je nach Betriebszustand unterschiedlicher Länge für die Gewichtungsvektoren extrahiert und je nach Betriebszustand den zu verwendenden Gewichtungsvektor aus einer ersten oder einer zweiten Menge von Gewichtungsvektoren wählt.

**Claims**

**1.** Method for transmitting feedback information for beam formation in a radio communication system with subscriber stations (MSk, MS1, MS2,...) and a base station (BS) which has antenna equipment (AE) with a plurality of antenna elements ($AE_1$ to $AE_M$) which radiate a downlink signal weighted in each case with components ($w_i$, i=1, ..., M) of a current weighting vector $w = (w_1\ w_2\ ...\ w_M)^T$ to a subscriber station (MSk), with the subscriber station (MSk) in a first operating state selecting one from among a limited first set of weighting vectors and transmitting a first identifier assigned to the assigned weighting vector to the base station as feedback information, **characterised in that**

- the subscriber station (MSk) and the base station (BS) temporarily switch over to a second operating state, with the subscriber station (MSk) in the second operating state selecting a suitable weighting vector from among a second set of weighting vectors which is smaller than the first set and to which are assigned second identifiers which are shorter than the identifiers of the first set, and transmitting the second identifier assigned to said weighting vector to the base station (BS) as feedback information.

**2.** Method according to claim 1, **characterised in that** the first operating state will be selected if an estimation of the speed of the subscriber station (MSk) falls below a limit value and the second operating state will be selected if said estimation exceeds the limit value.

**3.** Method according to claim 1, **characterised in that** the second operating state will be selected if the difference between an optimum weighting vector and a weighting vector of the second set falls $n_1$ times below a limit value and/or the first operating state will be selected if the difference between an optimum weighting vector and a weighting vector of the second set exceeds a limit value by $n_2$ times, with $n_1$, $n_2$ being small natural numbers.

**4.** Method according to one of the preceding claims, **characterised in that** in advance

- a switching bit sequence is defined which is not longer than a first identifier,
- the set of first identifiers is selected from among the digital data words of a given first length which neither begin with nor are identical to the switching bit sequence, and
- **in that** the subscriber station causes the base station (BS) to switch from the first to the second operating state by transmitting the switching bit sequence instead of a first identifier.

**5.** Method according to one of the preceding claims, **characterised in that** the subscriber station (MSk) and the base station (BS) will remain in the second operating state until the subscriber station (MSk) notifies the base station (BS) of the return to the first operating state.

6. Method according to one of claims 1 to 4, **characterised in that** the switching bit sequence is transmitted periodically in order to maintain the second operating state.

7. Method according to claim 6, **characterised in that** the number of bits in a first identifier is the same as the sum of the numbers of bits in the switching bit sequence and in n second identifiers (n≥2).

8. Method according to claim 7, **characterised in that** a bit sequence comprising a first part of the switching bit sequence, a second identifier, a second part of the switching bit sequence and a further second identifier is transmitted in the second operating state as feedback information.

9. Method according to claim 8, **characterised in that** the length of the second part of the switching bit sequence is the same as that of the first part or is 1 smaller than it.

10. Method according to one of the preceding claims, **characterised in that** the second identifiers identify weighting vectors, each of which has in the past been transmitted from the subscriber station to the base station or been used by the base station for transmitting to the subscriber station.

11. Method according to one of the preceding claims, **characterised in that** the set of second weighting vectors contains two elements and that the second identifiers are each one bit long.

12. Method according to one of the preceding claims, **characterised in that** the first and/or second identifiers comprise a selection section and a phase section, with the selection section specifying one or more basic vectors from among a predefined set of basic vectors from which the weighting vector can be formed through linear combination, and with the phase section containing details of the relative phase angle with which the specified basic vectors are entered in the linear combination.

13. Method according to claim 12, **characterised in that** the phase section further contains information about the relative amplitude with which the specified basic vectors enter the linear combination.

14. Method according to claim 12 or 13, **characterised in that** at least one specific selection section is used to signal to the base station that the weighting vector corresponds to a single basic vector and that information indicating which of the basic vectors corresponds to the weighting vector is transmitted in the phase section.

15. Method according to one of claims 10 to 14, **characterised in that** the first identifiers are assigned to the combinations of basic vectors in such a way that the identifiers of combinations differing with respect to two basic vectors differ in at least two bits.

16. Subscriber station for a radio communication system, in particular for implementing the method according to one of the preceding claims, which has been set up to determine by means of a radio signal received from the base station a weighting factor to be used by the base station for forming a beam sent to the subscriber station and to transmit an identifier of said weighting vector to the base station as feedback information, **characterised in that** said subscriber station can be switched between two operating states in which it in each case transmits identifiers of different length to the base station.

17. Subscriber station according to claim 16, **characterised in that** it selects the operating state to be used at a given time on the basis of records of weighting vectors determined in the past.

18. Base station for a radio communication system, in particular for implementing the method according to one of claims 1 to 15, which has been set up to use a weighting vector, identified by a subscriber station by means of feedback information, for forming a beam sent to the subscriber station, **characterised in that** said base station can be switched between two operating states in which it extracts identifiers for the weighting vectors from feedback information transmitted by the subscriber station, said identifiers being of different length depending on the operating state and, depending on the operating state, selects the weighting vector to be used from a first or a second set of weighting vectors.

**EP 1 352 483 B1**

**Revendications**

1. Procédé pour la transmission d'une information de rétroaction pour la formation du rayon dans un système de radiocommunication avec des stations d'abonnés (MSk, MS1, MS2, ...) et une station de base (BS), laquelle comporte un dispositif d'antenne (AE) comprenant plusieurs éléments d'antenne ($AE_1$ à $AE_M$) qui rayonnent un signal descendant respectivement pondéré avec des composantes (w;, i=1, ..., M) d'un vecteur de pondération actuel w = $(w_1\ w_2\ ...\ w_M)^T$ vers une station d'abonné (MSk), la station d'abonné (MSk) sélectionnant un vecteur de pondération dans un premier jeu limité de vecteurs de pondération et transmettant à la station de base, en tant qu'information de rétroaction, un premier identificateur affecté au vecteur de pondération associé, **caractérisé en ce que**

   - la station d'abonné (MSk) et la station de base (BS) passent temporairement dans un deuxième état de fonctionnement, la station d'abonné (MSk), dans le deuxième état de fonctionnement, sélectionnant, dans un deuxième jeu de vecteurs de pondération qui est plus petit que le premier jeu et auquel sont affectés des deuxièmes identificateurs, un vecteur de pondération approprié, et transmettant à la station de base (BS), en tant qu'information de rétroaction, le deuxième identificateur affecté à ce vecteur de pondération.

2. Procédé selon la revendication 1, **caractérisé en ce que** le premier état de fonctionnement est sélectionné lorsqu'une estimation de la vitesse de la station d'abonné (MSk) tombe en dessous d'une valeur limite et le deuxième état de fonctionnement est sélectionné lorsqu'elle dépasse la valeur limite.

3. Procédé selon la revendication 1, **caractérisé en ce que** le deuxième état de fonctionnement est sélectionné lorsque l'écart entre un vecteur de pondération optimal et un vecteur de pondération du deuxième jeu tombe $n_1$ fois en dessous d'une valeur limite et/ou le premier état de fonctionnement est sélectionné lorsque l'écart entre un vecteur de pondération optimal et un vecteur de pondération du deuxième jeu dépasse $n_2$ fois une valeur limite, $n_1$, $n_2$ étant de petits entiers naturels.

4. Procédé selon l'une des revendications précédentes, **caractérisé en ce que**, préalablement,

   - une suite de bits de commutation est définie, laquelle n'est pas plus longue qu'un premier identificateur;
   - l'ensemble des premiers identificateurs est sélectionné parmi les mots de données numériques d'une première longueur donnée qui ne commencent pas par la suite de bits de commutation ou ne lui sont pas identiques et
   - la station d'abonné provoque un passage de la station de base (BS) du premier état de fonctionnement au deuxième par transmission de la suite de bits de commutation au lieu d'un premier identificateur.

5. Procédé selon l'une des revendications précédentes, **caractérisé en ce que** la station d'abonné (MSk) et la station de base (BS) restent dans le deuxième état de fonctionnement jusqu'à ce que la station d'abonné (MSk) communique à la station de base (BS) le retour au premier état de fonctionnement.

6. Procédé selon l'une des revendications 1 à 4, **caractérisé en ce que** la suite de bits de commutation est transmise périodiquement pour maintenir le deuxième état de fonctionnement.

7. Procédé selon la revendication 6, **caractérisé en ce que** le nombre des bits d'un premier identificateur est égal à la somme des nombres des bits de la suite de bits de commutation et de n deuxièmes identificateurs ($n \geq 2$).

8. Procédé selon la revendication 7, **caractérisé par** la transmission, dans le deuxième état de fonctionnement, en tant qu'information de rétroaction, d'une suite de bits qui se compose d'une première partie de la suite de bits de commutation, d'un deuxième identificateur, d'une deuxième partie de la suite de bits de commutation et d'un autre deuxième identificateur.

9. Procédé selon la revendication 8, **caractérisé en ce que** la longueur de la deuxième partie de la suite de bits de commutation est égale à celle de la première partie ou inférieure de 1.

10. Procédé selon l'une des revendications précédentes, **caractérisé en ce que** les deuxièmes identificateurs désignent des vecteurs de pondération qui, dans le passé, ont été respectivement transmis de la station d'abonné à la station de base ou ont été utilisés par la station de base pour émettre vers la station d'abonné.

11. Procédé selon l'une des revendications précédentes, **caractérisé en ce que** le jeu des deuxièmes vecteurs de pondération comprend deux éléments et que les deuxièmes identificateurs ont une longueur respective d'un bit.

**12.** Procédé selon l'une des revendications précédentes, **caractérisé en ce que** les premiers et/ou les deuxièmes identificateurs se composent d'une section de sélection et d'une section de phase, la section de sélection spécifiant un ou plusieurs vecteurs de base tirés d'un ensemble donné de vecteurs de base à partir desquels le vecteur de pondération peut être constitué par combinaison linéaire et la section de phase contenant une indication sur la position de phase relative avec laquelle les vecteurs de base spécifiés entrent dans la combinaison linéaire.

**13.** Procédé selon la revendication 12, **caractérisé en ce que** la section de phase contient en outre une information sur l'amplitude relative avec laquelle les vecteurs de base spécifiés entrent dans la combinaison linéaire.

**14.** Procédé selon la revendication 12 ou 13, **caractérisé en ce qu'**au moins une section de sélection déterminée est utilisée pour signaler à la station de base que le vecteur de pondération correspond à un vecteur de base distinct et **en ce que**, dans la section de phase, une indication est transmise, laquelle renseigne lequel des vecteurs de base correspond au vecteur de pondération.

**15.** Procédé selon l'une des revendications 10 à 14, **caractérisé en ce que** les premiers identificateurs sont affectés aux combinaisons de vecteurs de base de manière telle que les identificateurs de combinaisons qui se différencient en deux vecteurs de base se distinguent en au moins deux bits.

**16.** Station d'abonné pour un système de radiocommunication, en particulier pour l'exécution du procédé selon l'une des revendications précédentes, aménagée de manière à déterminer, à l'aide d'un signal radio reçu par une station de base, un vecteur de pondération à utiliser par la station de base pour former un rayon envoyé à la station d'abonné, et à transmettre un identificateur de ce vecteur de pondération, en tant qu'information de rétroaction, à la station de base, **caractérisée en ce qu'**elle peut être commutée entre deux états de fonctionnement dans lesquels elle transmet respectivement des identificateurs de longueur différente à la station de base.

**17.** Station d'abonné selon la revendication 16, **caractérisée en ce qu'**elle sélectionne l'état de fonctionnement à utiliser à un instant donné à l'aide d'enregistrements concernant des vecteurs de pondération qui ont été déterminés dans le passé.

**18.** Station de base pour un système de communication radio, en particulier pour l'exécution du procédé selon l'une des revendications 1 à 15, aménagée de manière à utiliser un vecteur de pondération, désigné par une station d'abonné par le biais d'une information de rétroaction, pour former un rayon envoyé à la station d'abonné, **caractérisée en ce qu'**elle peut être commutée entre deux états de fonctionnement dans lesquels elle extrait de l'information de rétroaction transmise par la station d'abonné, pour les vecteurs de pondération, des identificateurs de longueur différente selon l'état de fonctionnement et sélectionne le vecteur de pondération à utiliser, selon l'état de fonctionnement, dans un premier ou dans un deuxième ensemble de vecteurs de pondération.

Fig.1

(Stand der Technik)

## Fig.2

## Fig.3

## Fig.5

## Fig.7

## Fig.8

# Fig.4

```
                                    ○
                                    │
                                    ▼
                        ┌─────────────────────┐
                        │   optimalen Vektor  │      S0
                        │     bestimmen       │
                        └─────────────────────┘
                                    │
                                    ▼
                        ┌─────────────────────┐
                        │  nächstkommenden    │
                        │  Gewichtungsvektor  │      S1
                        │   aus Satz 1 wählen │
                        └─────────────────────┘
                                    │
                                    ▼
                        ◇─────────────────◇                      S6
                        │  in Satz 2 ent- │   j            ┌──────────────┐
                        │     halten?     │────────────────│ Schaltbitfolge│  S6
                        ◇─────────────────◇                │   übertragen │
                              S2    │                       └──────────────┘
                                  n │                              │
                                    ○◄──────────────────────       │
                                    │                       │      ▼
         S3                         ▼                        ○◄─────────
          ┌─────────────────────┐            S7  ┌─────────────────────┐
          │   Bezeichner aus    │               │   Bezeichner aus    │
          │  Satz 1 übertragen  │               │  Satz 2 übertragen  │
          └─────────────────────┘               └─────────────────────┘
                                    │                        │
                                    ▼            S8           ▼
          ┌─────────────────────┐  S4           ┌─────────────────────┐
          │  Gewichtungsvektor  │               │   optimalen Vektor  │
          │  in Satz 2 einfügen │               │     bestimmen       │
          └─────────────────────┘               └─────────────────────┘
                                    │            S9           │
                                    ▼                         ▼
          ┌─────────────────────┐  S5           ┌─────────────────────┐
          │  Ältesten Eintrag aus│              │  nächstkommenden    │
          │  Satz 2 entfernen   │               │  Gewichtungsvektor  │
          └─────────────────────┘               │   aus Satz 1 wählen │
                                                 └─────────────────────┘
                                         S10               │
                                          ◇─────────────────◇  j
                                          │  in Satz 2 ent- │
                                          │     halten?     │
                                          ◇─────────────────◇
      1. Betriebszustand                            │ n
                                                              2. Betriebszustand
```

# Fig.6

# Fig.9

S20

Betr.-Zustand?

2

1

S23

Schaltbitfolge übertragen

bestmöglichen Gewichtungsvektor aus Satz 1 wählen

S24

bestmöglichen Gewichtungsvektor aus Satz 2 wählen

S6

S3

S21

Bezeichner aus Satz 1 übertragen

S22

S25

Bezeichner aus Satz 2 übertragen

Gewichtungsvektor in Satz 2 einfügen

S4

S26

bestmöglichen Gewichtungsvektor aus Satz 2 wählen

Ältesten Eintrag aus Satz 2 entfernen

S5

S27

Bezeichner aus Satz 2 übertragen

1. Betriebszustand

2. Betriebszustand